# EUROPÄISCHE PATENTSCHRIFT

(11) **EP 0 808 258 B1**
(45) Veröffentlichungstag und Bekanntmachung des Hinweises auf die Patenterteilung: **19.05.1999**
(21) Anmeldenummer: 96902268.0
(22) Anmeldetag: 13.02.1996
(51) Int. Cl.: B60R 21/26

(54) **GASGENERATOR IN BLECHBAUWEISE FÜR EINE KRAFTFAHRZEUGINSASSEN-SCHUTZVORRICHTUNG**
GAS GENERATOR MADE OF METAL SHEETS FOR PROTECTIVE DEVICES OF MOTOR VEHICLE PASSENGERS
GENERATEUR DE GAZ CONSTITUE DE TOLES METALLIQUES POUR DISPOSITIF DE PROTECTION DES PASSAGERS D'UN VEHICULE A MOTEUR

(30) Priorität: 18.02.1995 DE 19505580
(43) Veröffentlichungstag der Anmeldung: 26.11.1997
(73) Patentinhaber: Dynamit Nobel GmbH Explosivstoff- und Systemtechnik, 53840 Troisdorf (DE)
(72) Erfinder: BAYER, Karl, D-92348 Berg (DE); BREDE, Uwe, D-90765 Fürth (DE)
(74) Vertreter: Scherzberg, Andreas, Dr.
(86) Internationale Anmeldenummer: EP9600604
(87) Internationale Veröffentlichungsnummer: WO9626088

(56) Entgegenhaltungen:
- EP-A- 0 359 407
- EP-A- 0 369 579
- EP-A- 0 544 922
- WO-A-95/05297
- DE-U- 9 013 130
- DE-U- 9 113 005
- US-A- 5 217 697

## Beschreibung

Die Erfindung betrifft einen Gasgenerator in Blechbauweise für eine Kraftfahrzeuginsassen-Schutzvorrichtung.

Einen bekannten Gasgenerator zeigt die DE-A1-41 21 039. Dieser Gasgenerator ist konzentrisch aufgebaut, wobei um eine Anzündkammer mit einem Zünder und einer Anzündladung eine Brennkammer mit einer gaserzeugenden Ladung angeordnet ist und die Brennkammer von einer Expansionskammer umgeben ist. In der Expansionskammer ist ein Staubsammelraum und ein Abkühl/Expansionsraum enthalten. Das über Abströmöffnungen aus der Brennkammer entweichende Gas wird in einen Primär- und einen Sekundärstrom geteilt. Die Primärströmung drückt in den Staubsammelraum, während das gereinigte Gas über den Abkühl/Filterraum in den Gassack des Airbags geführt wird. Durch Geschwindigkeitserhöhung des ausströmenden Gases ist ein hohes Maß an Abscheideleistung erzielbar. Dies wird durch die eigene Abströmenergie des Gases erreicht.

Die als Stand der Technik nach Artikel 54 (3) und (4) EPÜ zu betrachtende EP-A-713 458, die auf der internationalen Anmeldung WO 95/05297 basiert, zeigt einen Gasgenerator in Blechbauweise für eine Kraftfahrzeuginsassen-Schutzvorrichtung in konzentrischer Bauweise, wobei um eine Anzündkammer mit einem Zünder und einer Anzündladung eine Brennkammer mit einer gaserzeugenden Ladung angeordnet ist, die Brennkammer von einer Expansionskammer umgeben ist und die Brennkammer und die Expansionskammer bildenden Blechteile ausschließlich durch Umformtechnik miteinander verbunden sind.

Der Erfindung liegt die Aufgabe zugrunde, einen solchen Gasgenerator derart zu verbessern, daß bei kleiner Baugröße niedrige Herstellkosten, geringes Gewicht und eine gute Recyclingfähigkeit gegeben ist.

Erfindungsgemäß wird diese Aufgabe durch die Merkmale des Anspruchs 1 gelöst.

Unter Umformtechnik wird Bördeln, Stauchen, Nieten, Taumel-Nieten, Verstemmen, Pressen und Aufweiten verstanden.

Durch die Verbindung der einzelnen Blechteile ausschließlich durch Umformtechnik sind niedrige Herstellkosten bei gleichzeitig kleinerer Baugröße und auch geringeres Gewicht zu erreichen. Außerdem ist eine Entsorgung durch eine gute Recyclingfähigkeit gewährleistet.

In bevorzugter Ausführungsform ist die Brennkammer aus zwei Blechteilen gebildet, wobei das innere Teil aus einer zylinderförmigen Innenwand mit einem an einem Ende rechtwinklig umgebogenen Bodenstück besteht und das äußere Teil aus einer zylinderförmigen Außenwand mit einem an einem Ende rechtwinklig umgebogenen Deckelstück besteht.

Erfindungsgemäß ist die Anzündkammer ein vorgefertigtes Anzündelement, welches in der zylinderförmigen Innenwand des inneren Teils der Brennkammer angeordnet ist. Hierdurch ist eine äußerst kompakte Bauform mit wenigen Teilen gegeben.

Die Blechteile sind erfindungsgemäß Stahlbleche, z.B. Edelstahl 1.4301 bzw. 1.4303 mit einer Wanddicke von bevorzugt ca. 1,0 bis 1,5 mm.

Erfindungsgemäß ist die gaserzeugende Ladung in der Brennkammer in einem hermetisch geschlossenen Ladebehälter angeordnet. Dieser besteht vorzugsweise aus Aluminium und ist im Fließpreßverfahren oder Tiefziehverfahren hergestellt und gewährt absolute Dichtheit gegen Feuchtigkeit von außen. Die Wanddicke des Ladebehälters beträgt bevorzugt ca. 0,2 bis 0,5 mm.

Zwischen der Brennkammer und der Expansionskammer sind drallerzeugende Austrittsöffnungen angeordnet. In bevorzugter Ausführungsform sind diese als gaubenförmige Ausstülpungen der zylinderförmigen Außenwand des äußeren Teils der Brennkammer ausgebildet. Diese Ausstülpungen werden durch Einschneiden und Herausdrücken der Brennkammerwand gebildet. Gegenüber dem Stand der Technik ist dadurch ein zusätzliches Bauteil eingespart worden.

Vorteilhafterweise besteht die Expansionskammer aus einer an die Austrittsöffnungen anschließenden Abscheidekammer und einer in Strömungsrichtung dahinter liegenden Filterkammer, wobei das ausströmende Gas beim Übergang von der Abscheidekammer zur Filterkammer eine Umlenkung um ca. 180° durchführt. Durch diese abrupte Umlenkung und in Zusammenwirkung mit der durch Rotation des ausströmenden Gases bedingten hohen Zentrifugalkraft wird ein Großteil der flüssigen und festen Teilchen, die dem Richtungswechsel nicht folgen, aus dem Gasstrom ausgeschieden.

Vorzugsweise ist die Filterkammer mit einem Filter gefüllt. Hierdurch erfolgt eine weitere Filterung und Abkühlung des Gases.

In bevorzugter Ausführungsform liegt eine Längswand der Filterkammer den Austrittsöffnungen gegenüber, und die eine Längswand ist in Bezug auf die Brennkammerwand (zylinderförmige Außenwand des äußeren Teils der Brennkammer) schräg angeordnet, wobei sich in Strömungsrichtung des ausströmenden Gases eine Durchmesserverkleinerung ergibt. Hierdurch ist die erforderliche Geschwindigkeitserhöhung des ausströmenden Gases erreicht.

Zur weiteren Filterung ist eine Wand der Abscheidekammer mit einem Filter bedeckt. Dieser Filter besteht vorzugsweise aus einem Drahtgestrick oder Drahtgewebe.

Bevorzugt eignet sich der erfindungsgemäße Gasgenerator als Fahrer-Gasgenerator, d.h. für die Fahrerseite eines Kraftfahrzeuges.

Weitere Merkmale der Erfindung ergeben sich aus den Figuren, die nachfolgend eingehend beschrieben sind. Es zeigt:
- Fig. 1: im Schnitt einen erfindungsgemäßen Gasgenerator,
- Fig. 2: einen Schnitt nach der Linie A-A von Fig. 1,
- Fig. 3: einen Ausschnitt mit dem Anzündelement einer alternativen Befestigungsform und
- Fig. 4: einen Schnitt durch die Expansionskammer einer alternativen Ausführungsform.

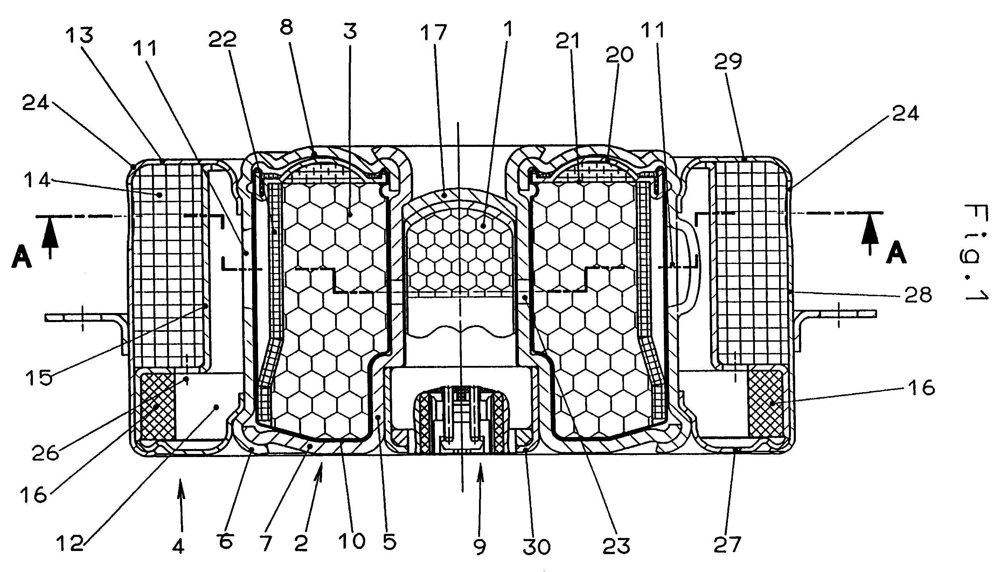

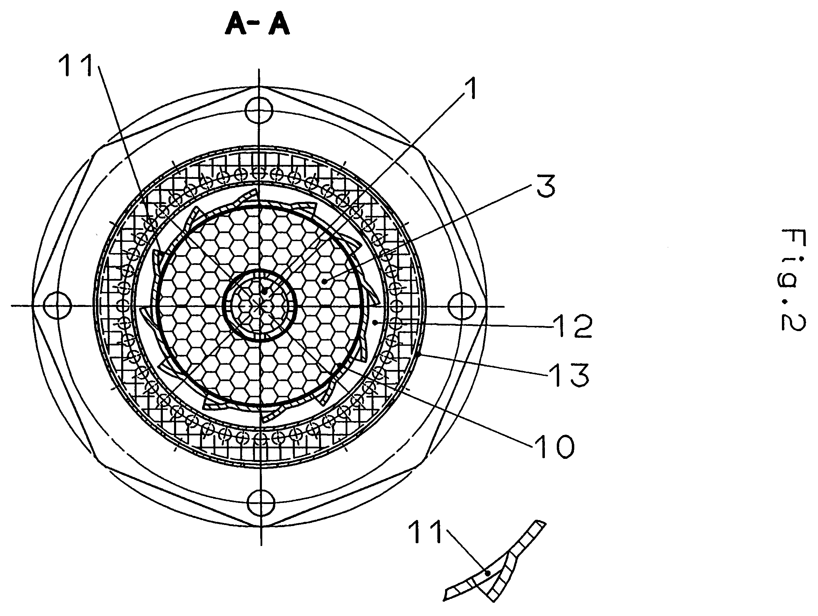

In den Figuren 1 und 2 ist ein erfindungsgemäßer Gasgenerator in Blechbauweise für eine Kraftfahrzeuginsassen-Schutzvorrichtung in konzentrischer Bauweise gezeigt. Um ein Anzündelement 9 ist eine Brennkammer 2 und eine Expansionskammer 4 angeordnet. Diese Kammern 2,4 sind aus Edelstahl ausschließlich durch Umformtechnik hergestellt.

Die Brennkammer 2 ist aus zwei Blechteilen, nämlich einem inneren Teil 5 und einem äußeren Teil 6, zusammengesetzt. Das innere Teil 5 besteht aus einer zylinderförmigen Innenwand mit einem an einem Ende rechtwinklig umgebogenen Bodenstück 7. Das äußere Teil 6 besteht aus einer zylinderförmigen Außenwand mit einem an einem Ende rechtwinklig umgebogenen Deckelstück 8. Mittels Bördeln sind diese beiden Teile 5,6 miteinander verbunden. Im Inneren der Brennkammer 2 ist ein Anzündelement 9 angeordnet. Hierzu ist eine Halteplatte 17 in der Wandung Brennkammer 2 eingeschlossen, an die das Anzündelement 9 anliegt. Befestigt ist das Anzündelement 9 über eine Hülse 30, die mittels Bördel auf das Anzündelement 9 drückt. Das innere Teil 5 und die Hülse 30 sind vorzugsweise durch Schweißen miteinander verbunden.

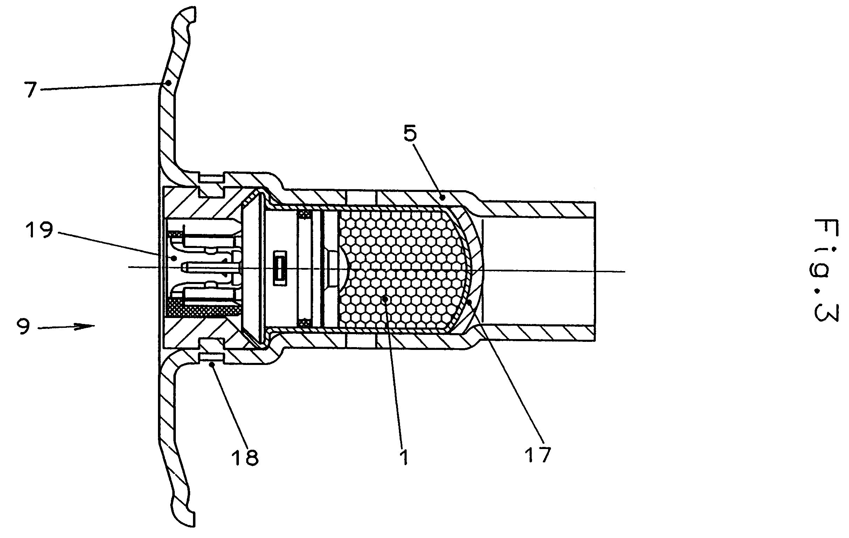

Fig. 3 zeigt das innere Teil 5 der Brennkammer 2 im gegenüber Fig. 1 vergrößerten Maßstab mit eingesetztem Anzündelement 9. Die Befestigung erfolgt hier durch clinchen, d.h. durch punktweises radiales Eindrücken der Wand 18 des inneren Teils 5 in eine Vertiefung im Anzündelement 9.

Das Anzündelement 9 ist Stand der Technik und besteht aus einer Buchse 19 zur Verbindung mit einem Stecker und Anschluß an eine Steuerelektronik. Im Inneren des Anzündelements 9 ist eine nicht gezeigte Zündbrücke angeordnet, die bei Anlegen einer Spannung ein Zündmittel anzündet, welches wiederum eine Anzündladung 1 zum Zünden bringt.

In der Brennkammer 2 ist ein Ladebehälter 10 angeordnet, der aus einem ringförmigen Topf mit einem Deckel 20 besteht. Topf und Deckel 20 sind miteinander durch Falzung verbunden. Zur Abdichtung ist der Dichtungsbereich mit einer Beschichtung wie z.B. Acrylatklebstoff versehen. Im Ladebehälter 10 ist die gaserzeugende Ladung 3 in Form von Treibstofftabletten untergebracht. Außerdem ist noch ein Volumenausgleich 21 und ein Drahtgewebe 22 angeordnet, welches das Verdämmen der Austrittsöffnungen 11 verhindert. Das Drahtgewebe 22 ist dazu in einem bestimmten Abstand zur Wand des Ladebehälters 10 angeordnet und erstreckt sich über die gesamte Länge des Ladebehälters 10.

Im inneren Teil 5 der Brennkammer 2 sind Bohrungen 23 angeordnet, die den Zündstrahl des Anzündelementes 9 in die Brennkammer 2 eintreten lassen. Nach initiierter Zündung des Anzündelements 9 durchschlägt dessen Zündstrahl nämlich den Ladebehälter 9 und zündet die gaserzeugende Ladung 3. Nach Erreichen eines bestimmten Berstdruckes öffnet der Ladebehälter 10 an den Austrittsöffnungen 11 der Brennkammer 2. Diese Austrittsöffnungen 11 sind als gaubenförmige Ausstülpungen bzw. als Segmentöffnungen vorzugsweise in Rechteckform oder in Kreissegmentform nach außen gedrückt, so daß ein tangentiales Abströmen des Gases aus der Brennkammer 2 erreicht ist. Vorzugsweise sind 12 Austrittsöffnungen 11 gleichmäßig auf dem Umfang verteilt angeordnet.

Angrenzend an die Brennkammer 2 ist eine Expansionskammer 4 angeordnet, die aus einer Abscheidekammer 12 und einer Filterkammer 13 besteht. Das ausströmende Gas gelangt aus den Austrittsöffnungen 11 in die Abscheidekammer 12 und wird dort spiralförmig in Richtung Bodenplatte geführt. Im Bereich der Bodenplatte wird der Gasstrom abrupt um ca. 180° umgelenkt und gelangt über Öffnungen 26 in die Filterkammer 13, die mit Filtermasse 14 gefüllt ist. Die Öffnungen 26 sind dabei unmittelbar nach dem Übergang von der Senkrechten in die Waagerechte angeordnet. In Zusammenwirkung mit der durch die Rotation bedingten hohen Zentrifugalkraft wird ein Großteil der flüssigen und festen Teilchen, die dem Richtungswechsel nicht folgen, aus dem Gasstrom ausgeschieden.

Die so aus dem Gas abgeschiedenen flüssigen und festen Teilchen werden in einem an der Außenwand der Abscheidekammer 12 angebrachten Drahtgestrick oder Drahtgewebe als Filter 16 festgehalten. Für die weitere Filterung und Abkühlung durchströmen die Gase einen Filter 14 in der Filterkammer 13 und strömen über die Austrittsöffnungen 24 in den Luftsack. Der Filter 14 ist vorzugsweise aufgebaut aus groben Drahtgewebe zur Abkühlung und Tressengewebe zur Feinfiltrierung.

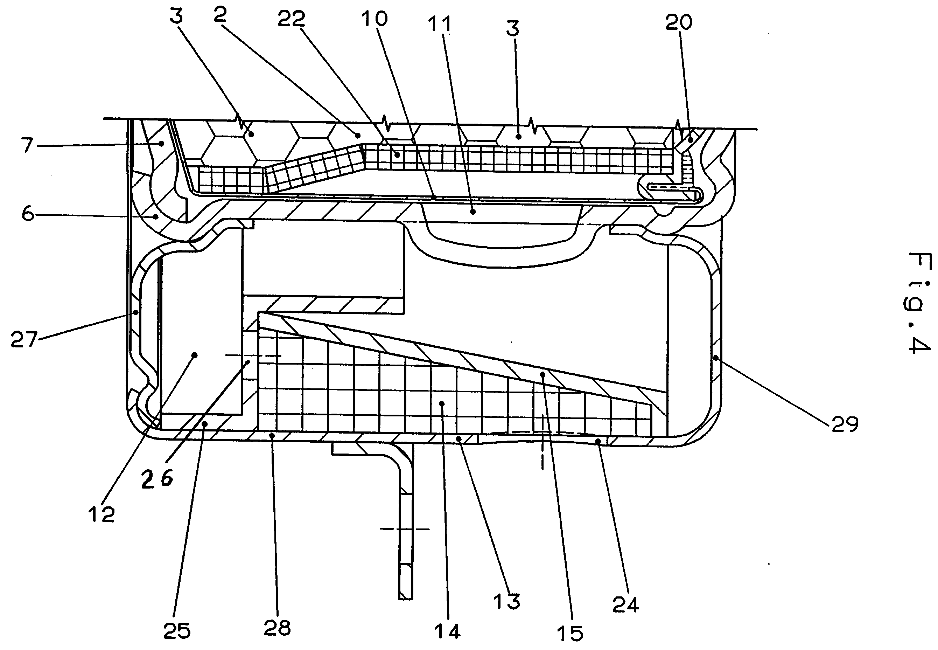

Fig. 4 zeigt eine spezielle Ausbildung der Expansionskammer 4. Hier ist die den Austrittsöffnungen 11 der Brennkammer 2 gegenüberliegende Längswand 15 der Filterkammer 13 in Bezug auf die Brennkammerwand (zylinderförmige Außenwand des äußeren Teils 6 der Brennkammer 2) schräg angeordnet, wobei sich in Strömungsrichtung des ausströmenden Gases eine Durchmesserverkleinerung ergibt. Die Längswand 15 ruht hierbei auf einem Abstandsflansch 25, in dem auch die Öffnungen 23 angeordnet sind. Der Abstandsflansch 25 sowie die Längswand 15 sind einfach in die Expansionskammer 4 eingesetzt.

Wie schon in Fig. 1 gezeigt, besteht auch in der Ausführungsform gemäß der Fig. 4 die Expansionskammer 4 aus lediglich zwei Blechen, nämlich einem Bodenblech 27 und einem Umfangstück 28 mit umgebogenem Deckel 29.

Der beschriebene Gasgenerator zeichnet sich durch folgende Vorteile aus:
- Die Verbindung der einzelnen Blechteile mittels Umformung wie Bördel, Stauchen ermöglicht niedrige Herstellkosten.
- Die Verwendung von Stahlblechen erlaubt eine kompakte und leichte Bauweise.
- Das tangentiale Ausströmen aus Segmentöffnungen, die den Gasstrom in Rotation versetzen, in Verbindung mit der abrupten Umlenkung der Gasschwaden erzeugt eine hohe Abscheidung und ermöglicht die Verwendung von einfachen Filteraufbauten.
- Gute Recyclingfähigkeit durch den Einsatz von ausschließlich eines Werkstoffes für Gehäuse und Filterung, z.B. Edelstahl 1.4301.

## Patentansprüche

1. Gasgenerator in Blechbauweise für eine Kraftfahrzeuginsassen-Schutzvorrichtung in konzentrischer Bauweise, wobei um eine Anzündkammer mit einem Zünder und einer Anzündladung (1) eine Brennkammer (2) mit einer gaserzeugenden Ladung (3) angeordnet ist, die Brennkammer (2) von einer Expansionskammer (4) umgeben ist, die Brennkammer (2) und die Expansionskammer (4) bildenden Blechteile ausschließlich durch Umformtechnik miteinander verbunden sind und die gaserzeugende Ladung (3) in der Brennkammer (2) in einem hermetisch geschlossenen Ladebehälter (10) angeordnet ist.

2. Gasgenerator nach Anspruch 1, dadurch gekennzeichnet, daß die Brennkammer (2) aus zwei Teilen (5, 6) gebildet ist, wobei das innere Teil (5) aus einer zylinderförmigen Innenwand mit einem an einem Ende rechtwinklig umgebogenen Bodenstück (7) besteht und das äußere Teil (6) aus einer zylinderförmigen Außenwand mit einem an einem Ende rechtwinklig umgebogenen Deckelstück (8) besteht.

3. Gasgenerator nach Anspruch 1 oder 2, dadurch gekennzeichnet, daß die Blechteile Stahlbleche sind.

4. Gasgenerator nach einem der Ansprüche 1 bis 3, dadurch gekennzeichnet, daß die Anzündkammer ein vorgefertigtes Anzündelement (9) ist, welches in der zylinderförmigen Innenwand des inneren Teils (5) der Brennkammer (2) angeordnet ist.

5. Gasgenerator mit drallerzeugenden Austrittsöffnungen (11) zwischen der Brennkammer (2) und der Expansionskammer (4) nach einem der Ansprüche 1 bis 4, dadurch gekennzeichnet, daß die Austrittsöffnungen (11) als gaubenförmige Ausstülpungen der zylinderförmigen Außenwand des äußeren Teils (6) der Brennkammer (2) ausgebildet sind.

6. Gasgenerator nach einem der Ansprüche 1 bis 5, dadurch gekennzeichnet, daß die Expansionskammer (4) aus einer an die Austrittsöffnungen (11) anschließenden Abscheidekammer (12) und einer in Strömungsrichtung dahinter liegenden Filterkammer (13) besteht, wobei das ausströmende Gas beim Übergang von der Abscheidekammer (12) zur Filterkammer (13) eine Umlenkung um ca. 180° durchführt.

7. Gasgenerator nach Anspruch 6, dadurch gekennzeichnet, daß die Filterkammer (13) mit einem Filter (14) gefüllt ist.

8. Gasgenerator nach Anspruch 6 oder 7, dadurch gekennzeichnet, daß eine Längswand (15) der Filterkammer (13) den Austrittsöffnungen (11) gegenüberliegt.

9. Gasgenerator nach Anspruch 8, dadurch gekennzeichnet, daß die eine Längswand (15) in Bezug auf die Brennkammerwand (zylinderförmige Außenwand des äußeren Teils (6) der Brennkammer (2)) schräg angeordnet ist, wobei sich in Strömungsrichtung des ausströmenden Gases eine Durchmesserverkleinerung ergibt.

10. Gasgenerator nach einem der Ansprüche 6 bis 9, dadurch gekennzeichnet, daß eine Wand der Abscheidekammer (12) mit einem Filter (16) bedeckt ist.

## Claims

1. Sheet-metal-style gas generator for a protective device of concentric construction for occupants of a motor vehicle, with there being arranged around an ignition chamber having an igniter and an ignition charge (1) a combustion chamber (2) having a gas-generating charge (3), the combustion chamber (2) being surrounded by an expansion chamber (4), the sheet-metal portions which form the combustion chamber (2) and the expansion chamber (4) being connected to each other solely by metal working and the gas-generating charge (3) being arranged in the combustion chamber (2) in a hermetically sealed charge container (10).

2. Gas generator according to claim 1, characterised in that the combustion chamber (2) is formed from two parts (5, 6), the inner part (5) comprising a cylindrical inner wall having a base piece (7) which is bent over at right angles at one end, and the outer part (6) comprising a cylindrical outer wall having a cover piece (8) which is bent over at right angles at one end.

3. Gas generator according to claim 1 or 2, characterised in that the sheet-metal parts are of sheet steel.

4. Gas generator according to one of claims 1 to 3, characterised in that the ignition chamber is a prefabricated igniter element (9) which is arranged in the cylindrical inner wall of the inner portion (5) of the combustion chamber (2).

5. Gas generator having swirl-generating outlet openings (11) between the combustion chamber (2) and the expansion chamber (4) according to one of claims 1 to 4, characterised in that the outlet openings (11) are formed as dormer-window-shaped protuberances of the cylindrical outer wall of the outer portion (6) of the combustion chamber (2).

6. Gas generator according to one of claims 1 to 5, characterised in that the expansion chamber (4) comprises a separation chamber (12) connected to the outlet openings (11) and a filter chamber (13) located behind the said separation chamber in the direction of flow, with the escaping gas undergoing a deflection about approximately 180° at the transition from the separation chamber (12) to the filter chamber (13).

7. Gas generator according to claim 6, characterised in that the filter chamber (13) is filled with a filter (14).

8. Gas generator according to claim 6 or 7, characterised in that a longitudinal wall (15) of the filter chamber (13) lies opposite the outlet openings (11).

9. Gas generator according to claim 8, characterised in that the one longitudinal wall (15) is arranged so as to be inclined with respect to the wall of the combustion chamber (cylindrical outer wall of the outer portion (6) of the combustion chamber (2)), resulting in a reduction in diameter in the direction of flow of the escaping gas.

10. Gas generator according to one of claims 6 to 9, characterised in that one wall of the separation chamber (12) is covered with a filter (16).

## Revendications

1. Générateur de gaz en tôle, à structure concentrique, pour un dispositif de protection des passagers d'un véhicule, dans lequel une chambre de combustion (2) contenant une charge (3) génératrice de gaz est disposée autour d'une chambre d'amorçage contenant une amorce et une charge d'amorçage (1) et la chambre de combustion (2) est entourée d'une chambre d'expansion (4), caractérisé par le fait que les éléments en tôle qui constituent la chambre de combustion (2) et la chambre d'expansion (4) sont liées les unes aux autres exclusivement par une technique de formage.

2. Générateur de gaz selon la revendication 1, caractérisé par le fait que la chambre de combustion (2) est formée de deux éléments (5, 6), l'élément intérieur (5) étant formé d'une paroi intérieure cylindrique avec une partie fond (7) pliée à angle droit à une extrémité et l'élément extérieur (6) étant formé d'une paroi extérieure cylindrique avec une partie couvercle (8) pliée à angle droit à une extrémité.

3. Générateur de gaz selon la revendication 1 ou 2, caractérisé par le fait que les éléments en tôle sont des tôles d'acier.

4. Générateur de gaz selon une des revendications 1 à 3, caractérisé par le fait que la chambre d'amorçage est un élément d'amorçage (9) préfabriqué qui est disposé dans la paroi intérieure cylindrique de l'élément intérieur (5) de la chambre de combustion (2).

5. Générateur de gaz pourvu d'orifices de sortie (11) provoquant une rotation entre la chambre de combustion (2) et la chambre d'expansion (4) selon une des revendications 1 à 5, caractérisé par le fait que les orifices de sortie (11) se présentent sous la forme de renflements formant lucarnes dans la paroi extérieure cylindrique de l'élément extérieur (6) de la chambre de combustion (2).

6. Générateur de gaz selon une des revendications 1 à 5, caractérisé par le fait que la chambre d'expansion (4) comprend une chambre de séparation (12) contiguë aux orifices de sortie (11) et une chambre de filtration (13) disposée en aval de celle-ci dans la direction d'écoulement, le gaz qui s'échappe subissant une déviation à 180° environ lors de son passage de la chambre de séparation (12) dans la chambre de filtration (13).

7. Générateur selon revendication 6, caractérisé par le fait que la chambre de filtration (13) est remplie d'un filtre (14).

8. Générateur de gaz selon la revendication 6 ou 7, caractérisé par le fait qu'une paroi longitudinale (15) de la chambre de filtration (13) est disposée en vis-à-vis des orifices de sortie (11).

9. Générateur de gaz selon la revendication 8, caractérisé par le fait que la paroi longitudinale (15) est inclinée par rapport à la paroi de la chambre de combustion (paroi extérieure cylindrique de l'élément extérieur (6) de la chambre de combustion (2)), ce que entraîne une réduction de diamètre dans la direction d'écoulement du gaz sortant.

10. Générateur de gaz selon une des revendications 6 à 9, caractérisé par le fait qu'une paroi de la chambre de séparation (12) est recouverte d'un filtre (16).
